# EUROPEAN PATENT APPLICATION

(11) **EP 2 774 760 A1**
(43) Date of publication of application: **10.09.2014**
(21) Application number: 14158233.8
(22) Date of filing: 07.03.2014
(51) Int. Cl.: B41F 13/20, F16D 1/097, F16C 13/00, F16D 1/09

(54) **Method and system of locking chuck cylinders in rotary rotogravure machines**

(30) Priority: 07.03.2013 IT PR20130015
(71) Applicant: Comexi Converting Solutions S.r.l., 29027 Podenzano (PC) (IT)
(72) Inventor: Contardi, Costante, 29027 Podenzano (PC) (IT)
(74) Representative: Benelli, Cristian

(57) **Abstract**

Object of the present finding is a device and relative method for fixing chuck cylinders (10) in rotary rotogravure machines.

It is provided to hold said chuck cylinder (10) in work position, generally horizontal, by inserting, in each side of said chuck cylinder, conical means of a conical adapter device (1) and a mechanical fastening of the same through a single screw (4), and/or stem with plunger, in order to provide the necessary axial fastening force on the conical seat.

## Description

### FIELD OF APPLICATION OF THE INVENTION

The present finding is inserted in the field of systems for fixing printing rollers in rotary rotogravure machines and more precisely regards the method and relative system of adapters for the support of the printing cylinders.

In particular, the aforesaid adapters are suitable for being employed on rotogravure cylinders, for which the so-called chuck system is provided.

### STATE OF THE ART

The rotogravure process is a large-run printing process which employs a mechanism for transferring ink very different from that of relief printing. The printing surface is a smooth metal roller covered with a myriad of minuscule cavities that form the images to be printed. The roller, which can be over two meters long, is partially immersed in a recipient full of solvent-based fluid ink. Once the roller has been soaked, a steel blade, or squeegee, slides along its length, scraping the ink from the surface and leaving it only in the cavities. The ink is then transferred onto the paper, which comes into contact with the roller through an intense pressure.

The color printing is obtained by using a plurality of printer rollers, each of which housed in a separate printing unit. The paper web is made to slide from unit to unit and after the color has been printed, the paper web is made to pass through a dryer.

The high cost of the rollers for the rotogravure process limits the use thereof to large-run printing (hundreds of thousands of copies), such as monthly magazines, mail order sales catalogues, product packages etc...

From that stated above, it results that the rotogravure printing machines of rotary type are composed of different stations, and each of which provides for a printing group composed of the roller on which the image to be printed is incised, which is immersed in a tray containing a specific ink color.

Once the printing step has terminated, it is necessary to disassemble, wash and substitute the cylinder for a new printing step.

In rotogravure machines, there are in fact the following:
- monolithic cylinders, hollow with integrated shaft,
- hollow cylinders with dismountable shaft,
- chuck cylinders.

The latter, i.e. the chuck cylinders, have a through hole with size greater than the hollow cylinders with dismountable shaft, and they have the conical mouth and sometimes a milled groove that indicates the point of reference for the coupling.

More specifically, the chuck cylinder is a normal cylinder with dismountable shaft on which no shaft is fit, and it is placed in the machine for the use of the chucks. Hence, even if chuck cylinders are conventionally referred to, in reality the cylinders are standard, while the real chucks are the conical adapters.

The big difference with respect to the normal chuck locking system lies in the fact that, in the present system, the seal of the tangs with the cylinder is inherent in the system itself (thrust of the inserts between the inner wall of the cylinder and the external conical wall) while in the conventional system, as in the patents mentioned hereinbelow, the thrust is carried out from the outside and it is unloaded on the structure of the machine.

The chuck cylinders are used on rotary rotogravure machines which have cones that are closed and maintain the cylinder with a very strong hydraulic axial thrust, which must be maintained while the cylinders are installed on the machine, also during the printing operations.

The need to provide this very strong axial thrust requires that the machine is provided with a system of hydraulic cylinders that is complex and costly.

With the adapters of the present invention, it is no longer necessary to have a strong axial sealing thrust and these cylinders can also be used on standard machines. Hence, those who already had a store of chuck cylinders can still use it on normal rotogravure machines.

The system of adapters provides for, in each side of the printing cylinder, a conical hub and a mechanical fastening thereof through a single screw, or stem, with plunger (pneumatic/hydraulic) for providing the necessary axial fastening force on the conical seat.

Some example of the prior art are described in the following patent documents: FR1048872, GB791201, EP0225509. These provide for holding, in work position, the printing cylinder by means of the insertion of an adapter device; nevertheless, they do not actuate a mechanical fastening according to the characterizing part of claim 1.

### EXPOSITION AND ADVANTAGES OF THE FINDING

Object of the present finding is to provide the art with a system for locking the chuck cylinders in rotary rotogravure machines. The multipurpose adapter is constituted by a conical hub and a system for mechanical fastening by means of a single bar, screw or stem, provided with (pneumatic/hydraulic) plunger in order to provide the necessary axial fastening force on the conical seat.

The advantages and applications obtainable by the finding can be assumed as follows:
1. Possibility of using the chuck cylinder thus adapted in a standard printing element, with the possibility of exploiting all the advantages relative to the rapid work change;
2. Use of the existing chuck cylinders without any kind of adaptation or modification thereof;
3. Mounting of the hubs by means of fastening of a single screw (in case of change outside the machine);
4. The conical hub adapter can be integrated in the machine drive.

Specifically, the adapters can be mounted on the drive and operator side of the machine, and can be automatically fastened after the introduction of the chuck cylinder. In this case, the (automatic) fastening provides for an axial closure of the drive (cylinder grip) and a fastening of the hubs themselves by means of pneumatic/electric motor that acts on the central screw of each hub; alternatively, a system of pistons/springs can be used that axially thrust the disc.

Said objects and advantages are all attained by the multipurpose method and system for locking the chuck cylinders in rotary rotogravure machines, subject of the present finding, which is characterized for that provided for in the below-reported claims.

### BRIEF DESCRIPTION OF THE FIGURES

This and other characteristics will be clearer from the following description of several embodiments illustrated, as a merely non-limiting example, in the set of drawings.
- Figure 1: schematically illustrates a chuck cylinder in a rotary rotogravure machine; the chuck cylinder held in position by means of the present adapter device,
- Figure 2: illustrates the present adapter locking configuration with the cylinder,
- Figure 3: illustrates the present adapter in open configuration for its insertion and unthreading from the cylinder.

### DESCRIPTION OF THE FINDING

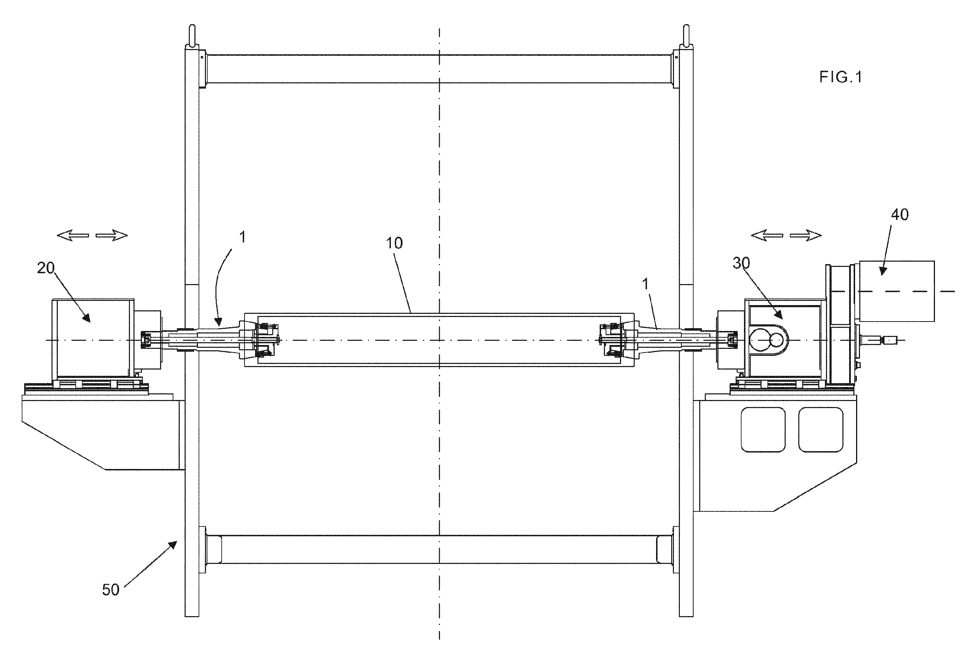

With particular reference to figure 1, a rotary rotogravure machine is indicated with reference number 50, or rather its casing, suitable for supporting one or more printing cylinders, arranged horizontally.

In the figure, only one chuck cylinder is illustrated, indicated with 10, hollow at its interior. The chuck cylinder is of the type comprising a through hole with conical mouth. Sometimes it bears a milled groove which indicates the reference point for the coupling.

The chuck cylinder 10 is supported at the ends by means of two multipurpose adapters 1, subject of the present finding.

Specifically, each adapter 1 consists of four main parts, i.e.:
- a tang 2 with conical end 2A; said end closed by
- a frustoconical cover 3 on which corresponding conical seats 3A are obtained that are adapted to house
- a plurality of clamps 9 slidable in said seats 3A by means of arms 8 connected to, and guided by,
- a disc 7 that can be axially moved by means of actuation of a screw 4 coaxial with said tang 2.

From that stated above, it is clear that the mechanical fastening of the adapter 1 against the chuck cylinder 10 occurs after the rotary actuation of the screw 4 and/or stem with plunger.

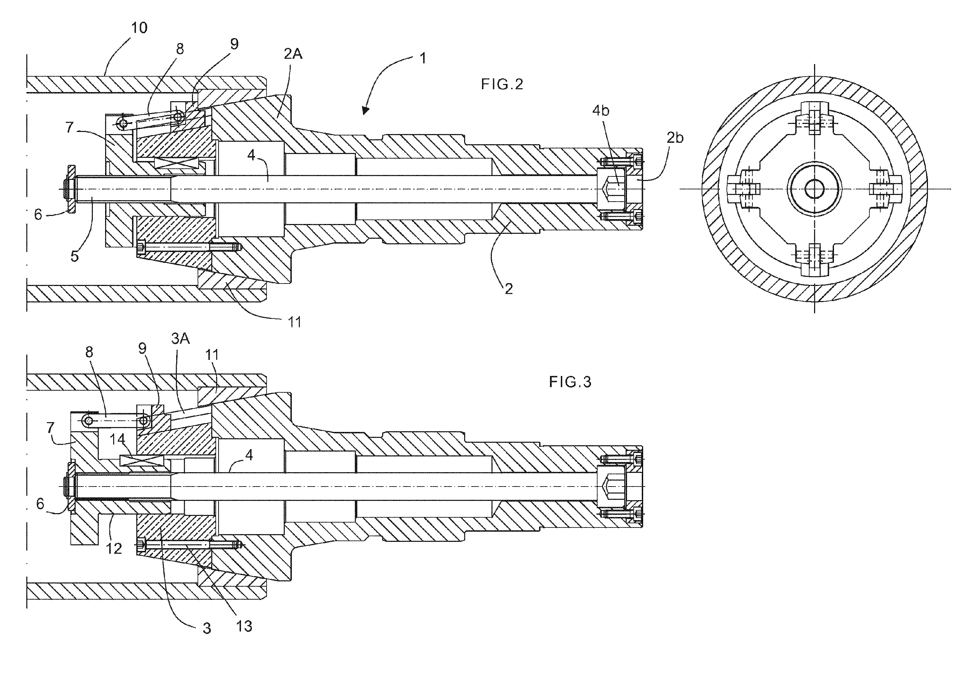

The aforesaid rotation generates an axial movement of the disc 7. Figures 2 and 3 illustrate the two limit configurations of the disc 7.

The disc 7 bears a plurality of arms 8 hinged thereto, such arms directed towards the tang 2 and in turn connected, at the opposite end, to respective blocks 9, i.e. the means that will act as clamps for the cylinder 10.

Each clamp is slidable in the corresponding conical seats 3A obtained in a cover 3 in abutment against the conical portion 2A of the tang 2.

In other words, by rotating the screw 4, threaded in 5, the sliding movement of the mobile means, 7, 8, 9, of the adapter 1 is induced; the disc 7 slides axially, causing the expansion of the clamps 9 which come to press against the edge of the inner face of a ring 11 inserted within the cylinder 10. The ring 11 has a conical mouth, with concavity converging towards the median point of the cylinder.

Returning once again to figure 1, it is observed that the cylindrical portion of each adapter 1 is fit on the lateral structure of the casing 50 of the rotary rotogravure machine. Naturally, the holes of the casing are arranged where the chuck cylinder 10 will be placed.

The axial movement of the adapters towards the interior of the cylinder, which thus carries out the centering and gripping, occurs via the movement of the means 20, 30 actuated by motor screw and/or pneumatic piston.

Subsequently, the fastening of the adapters can be carried out by means of screw 5, the latter actuated by electric/pneumatic motor integrated in 20, 30 or, in the case the latter is substituted by a stem, by a piston present inside the pneumatic or hydraulic means 20, 30.

In figure 1, reference number 40 represents the drive motor.

Preferably, a cylinder will be used with relative thrust spring for maintaining the seal of the cylinder in case of interruption of the air/oil flow rate.

The dismantling occurs by unscrewing the axial screw or by moving the stem of the plunger, obtaining the release of the grip and the reduction of the size diameter of the inserts for the unthreading.

In addition to the elements described, the presence of the following is also observed in the figures:
- a tongue 14 which serves for the axial sliding of the disc 7, by fitting with the cover 3
- at least one means 13 for fixing the cover 3 against the conical portion of the tang 2A
- an end stop 6 placed at the end of the screw 4 which limits the travel of the disc 7 during its opening.

## Claims

1. Method for fixing chuck cylinders (10) in rotary rotogravure machines, said chuck cylinders of the type comprising a through hole with conical mouth; the method provides for holding said printing cylinder in the work position, generally horizontal, by inserting, in each side of said chuck cylinder (10), conical means of a conical adapter device (1) and a mechanical fastening of the same through a single screw (4), or stem with plunger, for providing the required axial fastening force on the conical seat; the method is **characterized in that** said mechanical fastening occurs following the rotary actuation of the screw (4) and/or stem with plunger; thus, said rotation generating an axial movement of a disc (7) and relative plurality of arms (8) connected to clamps (9) slidable in conical seats (3A) of a cover (3), the latter in abutment against a conical portion (2A) of a tang (2) of the adapter device (1)

2. Adapter device (1) for fixing chuck cylinders in rotary rotogravure machines of the type comprising a through hole with conical mouth, the device (1) **characterized in that** it comprises at least:
a. one tang 2 with a conical end 2A; said end closed by
b. a frustoconical cover 3 on which corresponding conical seats 3A are obtained that are adapted to house
c. a plurality of clamps 9 slidable in the respective conical seats by means of arms 8 connected to, and guided by,
d. a disc 7 which can be moved axially by means of displacement means associated with said tang 2.

3. Device (1) according to claim 2, **characterized in that** said displacement means comprise a screw 4, or a plunger, rotary coaxial to the tang 2; the screw 4, threaded in 5, and coupled to a thread of said disc 7, causes a sliding movement of the mobile means, 7, 8, 9, of the adapter 1; the disc 7 slides axially, causing the expansion of the clamps 9 which come to press against the edge of the inner face of a ring 11 inserted within the cylinder 10.

4. Device (1) according to claim 2, **characterized in that** said displacement means comprise an axial plunger held in position by pneumatic and/or hydraulic means; preferably a cylinder with relative thrust spring for maintaining the seal of the cylinder in case of interruption of the air/oil flow rate.
